# EUROPÄISCHE PATENTANMELDUNG

(11) **EP 1 619 444 A1**
(43) Veröffentlichungstag der Anmeldung: **25.01.2006**
(21) Anmeldenummer: 05016132.2
(22) Anmeldetag: 25.07.2005
(51) Int. Cl.: F24D 11/00, F24D 3/12, F24J 3/08, F28D 20/00, E04B 1/76

(54) **Temperiertes Gebäude und Verfahren zur Herstellung eines temperierten Gebäudes**

(30) Priorität: 23.07.2004 DE 102004035946
(71) Anmelder: Ingenieurbüro Makel GmbH, 59302 Oelde (DE)
(72) Erfinder: Faber, Andreas, 59302 Oelde (DE)
(74) Vertreter: Schütte, Hartmut

(57) **Zusammenfassung**

Temperierbares Gebäude mit einem temperierbaren Innenraum, einer Außenhülle mit einer äußeren Oberfläche und mit einer Steuereinrichtung. Eine eine Temperierschicht aufweisende Temperiervorrichtung ist vorgesehen, welche durch die Steuereinrichtung gesteuert die Temperierschicht zum Heizen oder zum Kühlen des Gebäudes mit einer Wärmeträgerflüssigkeit beschickt. Ein jahreszeitlicher Energiespeicher wird beim Kühlen des Gebäudes aufgeladen und beim Heizen des Gebäudes entladen. Die Temperierschicht ist zwischen der Isolierschicht und der äußeren Oberfläche angeordnet.

## Beschreibung

Die Erfindung betrifft ein temperiertes Gebäude, sowie ein ein Verfahren zur Herstellung eines solchen Gebäudes. Insbesondere betrifft die Erfindung ein Gebäude, wie z.B. ein Wohn- und/oder Bürogebäude, ein Fertigungsgebäude oder eine Lagerhalle oder dergleichen, wobei das Gebäude wenigstens teilweise mit einem temperierbaren Wandsystem ausgerüstet ist.

Unter Temperieren im Sinne der vorliegenden Erfindung wird das Heizen bzw. das Kühlen des Gebäudes oder des umbauten Raumes bzw. Innenraumes eines Gebäudes verstanden. Das schließt ein zeitlich und/oder örtlich versetztes Heizen und/oder Kühlen ein.

Im Stand der Technik sind verschiedene Systeme zur Temperierung von Gebäuden bekannt geworden. Für das Temperieren eines Gebäudes sind z.B. Wandheizungselemente bekannt geworden.

So ist z.B. in der AT 005 110 U1 ein Mauerwerk mit integrierbarer Wandheizung offenbart. Dabei ist auf der Außenseite einer Außenwand ein Außenputz auf einem Vollwärmeschutz angebracht. Auf der Innenseite der gemauerten Wand sind Heizungsrohre in Schlitze der Wand eingelegt. Mit dem Innenputz werden auch die Schlitze für die Heizungsrohre zugeputzt. Die Beheizung erfolgt auf der Innenseite des Mauerwerks. Eine solche Wandheizung hat den Nachteil, dass eine Nachrüstung bei Altbauten nur mit hohem Aufwand möglich ist. Außerdem muss das Temperatumiveau für Heizzwecke ausreichend hoch sein.

Insbesondere bei Einsatz von regenerativen Energiequellen, ist das Temperatumiveau der Energiequelle oft begrenzt. Dies gilt auch für z.B. geothermische Energie bzw. Erdwärme, die an sich zur Heizung oder Kühlung von z.B. Gebäuden geeignet ist. Die Höhe der Temperatur der Erdwärme hängt in der Regel von der Tiefe der Bohrung ab. Dabei kann man von einem Temperaturanstieg von z.B. etwa 30°C pro 1000 m Tiefe ausgehen. Für hohe Temperaturen muss deshalb in der Regel tief gebohrt werden, was entsprechend aufwendig und teuer ist.

Da man die eingebrachte Leistung pro Meter Bohrtiefe in erster Näherung mit z.B. 40 W/m abschätzen kann, ermöglicht eine 1000 m tiefe Bohrung eine Wärmeleistung von ca. 40 kW . Das ist erheblich mehr, als für die Beheizung eines Einfamilienhauses erforderlich ist, so dass deshalb dafür ein derart tiefes Bohrloch nicht benötigt wird. Außerdem ist der bohrtechnische Aufwand für solch tiefe Bohrungen groß.

In der Regel werden deshalb eine oder mehrere Bohrungen mit einer Tiefe zwischen 50 m und 200 m gemacht, um die gewünschte Wärmemenge dem Erdreich zu entziehen. Bei solchen Bohrtiefen liegt das Temperaturniveau der dem Erdreich entzogenen Wärme zwischen etwa 12°C und 18°C. Das ist für konvektive Heizkörper zu niedrig. Deshalb wird mittels einer Wärmepumpe die dem Erdreich entzogene Leistung auf das benötigte Temperatumiveau transformiert und das Haus wird dann über ein konventionelles Heizsystem geheizt. Nachteilig daran ist, dass eine Wärmepumpe zum Betrieb benötigt wird.

In den Sommermonaten ist oft ein Energieüberschuss aus z.B. solarer Einstrahlung vorhanden, die jahreszeitliche Speicherung lohnt sich aber nicht, da die Wärmeverluste bei einem Speichertemperatumiveau von z.B. 50°C für eine effektive jahreszeitliche Speicherung selbst bei einer sehr guten Isolierung zu hoch sind.

Auch ohne den Einsatz einer Wärmepumpe kann die Erdwärme genutzt werden. So ist z.B. aus der DE 196 06 727 A1 die Verwendung von Erdwärme für eine Kühl- und Klimaanlage für Wohn- und Aufenthaltsräume bekannt geworden. Dabei wird die niedrige Temperatur der Erdwärme zur Klimatisierung und insbesondere zur Kühlung bei hohen Lufttemperaturen im Sommer verwendet. Ein solches System kann auch verwendet werden, um z.B. Gewächshäuser im Winter frostfrei zu halten. Außerdem werden bei Nutzung von Erdwärme ohne den Einsatz einer Wärmepumpe z.B. Start- und Landebahnen von Flughäfen frostfrei gehalten. Dazu kann die Wärme aus z.B. 100 m Tiefe auf einem Temperatumiveau von z.B. 14°C verwendet werden. Zur Beheizung von Wohnungen oder Einfamilienhäusern ist das System ohne Wärmepumpeneinsatz nicht geeignet, da für die meisten Menschen 14°C in Wohnräumen keine behagliche Temperatur darstellt.

Gegenüber diesem Stand der Technik ist es Aufgabe der vorliegenden Erfindung, ein temperierbares Gebäude und ein Verfahren zur Herstellung eines temperierbaren Gebäudes zur Verfügung zu stellen, bei welchem ein kostengünstiger jahreszeitlicher Energiespeicher verwendet wird.

Diese Aufgabe wird durch ein temperierbares Gebäude mit den Merkmalen des Anspruchs 1 und durch ein Verfahren zur Herstellung eines temperierbaren Gebäudes mit den Merkmalen des Anspruchs 9 gelöst. Bevorzugte Weiterbildungen sind Gegenstand der Unteransprüche.

Das erfindungsgemäße temperierbare Gebäude weist wenigstens einen temperierbaren Innenraum und wenigstens eine Außenhülle mit eine äußeren Oberfläche und wenigstens eine Temperierschicht und wenigstens eine Isolierschicht auf. Weiterhin ist wenigstens eine Steuereinrichtung vorgesehen. Mit wenigstens einer Temperiervorrichtung wird die Temperierschicht zum Heizen und/oder zum Kühlen des Gebäudes mit einer Wärmeträgertlüssigkeit beschickt. Die Temperiervorrichtung wird mittels der Steuereinrichtung gesteuert. Wenigstens ein jahreszeitlicher Energiespeicher ist vorgesehen. Erfindungsgemäß wird der Energiespeicher beim Kühlen des Gebäudes aufgeladen und beim Heizen des Gebäudes entladen, wobei die Temperierschicht zwischen der Isolierschicht und der äußeren Oberfläche angeordnet ist.

Das temperierbare Gebäude weist eine innere Oberfläche auf, welche an den zu temperierenden Innenraum angrenzt, während die äußere Oberfläche an die Umgebung angrenzt.

Die Erfindung hat viele Vorteile. Bei der vorliegenden Erfindung wird die Temperierschicht (Heiz- und oder Kühlschicht) nicht auf der Innenseite des Wandsystems vorgesehen, sondern die Temperierschicht wird auf der Außenseite der Isolierschicht angeordnet. Da auf die Außenhülle geheizt wird, reicht ein niedriges Temperatumiveau zur Heizung und ein relativ hohes Temperaturniveau zur Kühlung aus. Das bietet erhebliche Vorteile.

Es wird eine Temperierung bzw. Heizung mit Niedrigtemperaturniveau oder sogar Niedrigsttemperatumiveau ermöglicht, bei der zur Heizung Temperaturen zwischen z.B. 10 und 18°C verwendet werden können, wie sie z.B. im oberflächennahen Erdreich in 50 bis 100 m Tiefe vorherrschen. Relativ hohe Temperaturen von z.B. 30°C, wie bei herkömmlichen Niedertemperaturheizungen, werden nicht benötigt.

Das Temperatumiveau zur Heizung und Kühlung bietet auch den Vorteil, dass eine jahreszeitliche Speicherung effektiv und kostengünstig möglich ist. Im Sommer wird die anfallende Sonnenenergie genutzt, indem der bei der Kühlung abgeführte Wär mestrom gespeichert wird. Diese Energie dient im Winter zur Beheizung des Gebäudes. Da durch den Aufbau des Gebäudes ein niedriges Temperatumiveau zu Beheizung ausreicht, kann die nötige Heizenergie über lange Zeit mit erheblich geringeren Verlusten sehr kostengünstig gespeichert werden. Umgekehrt wird bei hohen Außentemperaturen im Sommer das gleiche Temperaturniveau zur Kühlung eingesetzt, wie im Winter zu Heizung. Da die Energie ohne kosten- und energieintensive Maßnahmen aus dem Speicher entnommen werden kann bzw. auch auf einfache Weise in den Speicher wieder eingebracht werden kann, ist das temperierbare Gebäude sehr kostengünstig im Betrieb. Es wird nur Umwälzenergie für die Wärmeträgertlüssigkeit benötigt, die gering ist, da die Wärmeträgerflüssigkeit nahezu inkompressibel ist. Das ist ein großer Vorteil gegenüber einem gasförmigen Wärmeträgerfluid, bei dem ein erheblicher Aufwand zur Umwälzung des Fluides entsteht.

Eine wesentliche Idee bei der vorliegenden Erfindung ist es, ein Gebäude zur Verfügung zu stellen, das praktisch in "frühlingshafte" Temperaturen zwischen 10°C und 20°C gestellt wird, auch wenn die wirkliche Außentemperatur erheblich geringer oder erheblich höher ist. Bei den genannten frühlingshaften Temperaturen kann bei konventionellen Gebäuden oft schon auf den Betrieb der konventionellen Heizung verzichtet werden. Umgekehrt wird auch keine zusätzliche Klimaanlage benötigt.

Das Temperaturniveau der Temperierung ist bei dem erfindungsgemäßen Gebäude deutlich geringer, als wenn die Innenseite (einer Wand) temperiert wird. Primär wird nicht der Innenraum temperiert, sondern es wird die Außenhülle des Gebäudes temperiert. Vorzugsweise wird die Außenhülle über das ganze Jahr auf der gleichen Temperatur gehalten. Dadurch ergibt sich im Innenraum automatisch eine Innentemperatur, die unabhängig von Jahreszeit und den aktuellen Außenbedingungen ist. Ein direktes Heizen oder Kühlen des Innenraums findet an sich nicht statt, kann aber unabhängig davon je nach z.B. geographischer Lage noch vorgesehen sein.

Die Temperierung der Temperierschicht bedeutet, dass ein Temperaturniveau von 12°C bis 18°C vollkommen ausreichen kann, um ein angenehmes und behagliches Klima für einen Bewohner zur Verfügung zu stellen, ohne weitere Heizquellen hinzuzuziehen. In einem durchschnittlichen Haushalt kann schon ein Temperatumiveau der Temperierschicht von z.B. 14°C oder 15°C ausreichen, um ein behagliches Wohnklima im Winter oder im Sommer zu erzielen. Es wird erfindungsgemäß das ganze Jahr das Gebäude von außen mit einem im Wesentlichen einheitlichen Temperatumiveau temperiert.

Zwar wird sich bei einem vollständig ungenutzten Gebäude, das insgesamt auf den Außenflächen mit einem solchen Wandsystem ausgerüstet ist, die Innentemperatur des Gebäudes auf Dauer der Temperatur der Temperierschicht angleichen, aber wenn die Temperatur der Temperierschicht z.B. 15°C beträgt, würde dann die Temperatur im Inneren ebenfalls wenigstens 15°C betragen, und zwar unabhängig von der jeweiligen Außentemperatur.

In einem bewohnten oder bewirtschafteten Gebäude sind heute hingegen eine Reihe von Wärmequellen vorhanden, die die Innentemperatur automatisch deutlich anheben. Zu den Wärmequellen zählen die Bewohner selbst, die Wärmeleistung an die Räume abgeben und insbesondere aber auch elektrische Geräte, wie Lampen, Kühl- und Gefrierschränke, Radios und Femseher, sowie Computer, Anrufbeantworter, Trockner etc., die im normalen oder auch im Standby-Betrieb einige Wärme abgeben. Auch beim Kochen oder Backen etc. wird Wärme frei, die zur Erhöhung der Innentemperatur beiträgt. Das bedeutet, dass in solchen Gebäuden in der Regel auch bei Beheizung mit 15°C eine ausreichende Innenraumtemperatur ohne weitere Heizquellen erzielbar ist.

Als Energiequelle zur Temperierung des erfindungsgemäßen Gebäudes wird ein jahreszeitlicher Wärmespeicher eingesetzt. Vorzugsweise wird ein Erdwärmeenergiespeicher verwendet Bei Einsatz von Erdwärme ist es bevorzugt, dass oberflächennahe Erdwärme verwendet wird. Dazu wird ein Erdwärmespeicher verwendet, der das Erdreich in einer Tiefe bis zu etwa 500 m, insbesondere bis zu ca. 200 m, vorzugsweise bis zu einer Tiefe von 30 m oder 50 m oder ungefähr 100 m genutzt. Die Angaben dienen nur als Richtschnur, so dass erhebliche Abweichungen möglich und zulässig sind. Insbesondere sind Abweichungen um +/- 50% der genannten Zahlenwerte möglich.

Die Energie des Erdwärmespeichers bzw. die Erdwärme wird insbesondere über eine Erdsonde oder mehrere Erdsonden aufgenommen bzw. abgegeben, die sich bis in eine Tiefe von 50 oder 150 m erstreckt bzw. erstrecken. Solche Erdsonden sind meist als zylindrische Bohrungen vorgesehen und können z.B. als Koaxialsonden, Einfach-U-Sonden oder Doppel-U-Sonden ausgeführt sein. Bei Doppel-U-Sonden werden zwei U-förmige Rohre installiert, wobei die einzelnen Rohre oft Durchmesser zischen 2 und 5 cm aufweisen und aus verschiedenen Materialien bestehen können, z.B. aus HDPE-Kunststoff. Der Raum zwischen den einzelnen Rohren oder Schläuchen wird mit einem geeigneten Material aufgefüllt, welches eine vernünftige wärmetechnische Anbindung an die Umgebung erlaubt.

Wird Wärme über eine solche oder eine vergleichbare Erdsonde in das Erdreich eingebracht oder daraus abgeführt, so ist das Erdreich ein jahreszeitlicher Energiespeicher. Im Sommer wird die überschüssige Wärme von dem Gebäude abgeführt und im Erdreich gespeichert und im Winter kann die gespeicherte Wärme wieder entnommen werden. Dabei dient das Erdreich in einem Radius von etwa 5 m bis 10 m oder 15 m um die Erdsonde herum als Energiespeicher. Ein Vorteil dieses Speichers ist, dass, je nach Bedarf, auch noch mehr Erdwärme abgezogen werden kann, als gespeichert wurde, ohne dass eine Entleerung des Speichers zu befürchten ist.

Ein Vorteil einer Speicherung der im Sommer abgeführten Wärme liegt darin, dass das Temperatumiveau um die Erdsonde herum insgesamt um ein Grad oder um einige Grade ansteigt, so dass im Winter ein höheres Temperatumiveau zur Verfügung steht. Ein zweiter Vorteil ist die effektive Kühlung des Gebäudes. Für die Kühlung und/oder Heizung wird nur die (elektrische) Energie der Umwälzpumpen benötigt, die aber relativ gering ist.

Wenn der Wärme- oder Kohlbedarf in einer Heiz- oder Kühlperiode einmal höher ist, als in der vorhergehenden Periode gespeichert oder entnommen wurde, so wirkt sich das nicht schlagartig aus, sondern wirkt sich nur bedingt aus, da in solchen Fällen dann langsam das umgebende Erdreich des Speichers angezapft wird. Auch bei einer größeren Entnahme aus dem Speicher über ein oder zwei Jahre hinaus, wird die Temperatur des Speichers sich nur langsam verändern, so dass z.B. im Falle eines "verregneten" Sommers dennoch eine effektive Heizung im Winter möglich ist Im Unterschied zu konventionellen Speichern kann dieser Speicher nicht vollständig entleert werden. Es handelt sich insofern um einen unerschöpflichen Energiespeicher.

Ein ganz erheblicher Vorteil einer solchen Ausgestaltung ist, dass das Temperatumiveau zur Heizung und zur Kühlung im gleichen Bereich liegt, wie ihn das Erdreich in gewissen Tiefen aufweist. Dadurch ist eine besonders effektive Speicherung möglich, da die Wärmeverluste keine wesentliche Rolle spielen. Wenn eine Fassade im Sommer stark beschienen wird und ein Wärmestrom bei 40°C in den Erdwärmespeicher abgeführt wird, so wird die eingebrachte Wärme dort im umgebenden Erdreich bei z.B. 15°C gespeichert. Im Laufe eines Sommers kann sich diese Temperatur langsam erhöhen. Ein Teil der eingebrachten Wärme fließt in die nähere und ein weiterer Teil in die weitere Umgebung ab. Das ist aber nicht negativ, da die Wärme im Winter dem Erdreich entzogen wird. Da diese aber schon vorher eingebracht wurde, besteht im Laufe der Jahre keine Gefahr einer immer stärker werdenden Absenkung der Temperatur im Erdreich. Insofern ist der jahreszeitliche Erdwärmespeicher in seiner Kapazität nicht begrenzt.

Der Speicher kann als einen Permanentspeicher bezeichnet werden, der Energie zeitlich nahezu unbegrenzt speichert. Die Speicherung der Energie erfolgt auch insofern permanent, da durch die geringe Speichertemperatur nur äußerst geringe irreversible Wärmeverluste auftreten.

Es ist vorzugsweise wenigstens ein Temperaturfühler vorgesehen. Vorzugsweise sind mehrere oder viele Temperaturfühler vorgesehen. Zur Umwälzung des Wärmeträgermediums dient eine Umwälzpumpe, die mittels der Steuereinrichtung gesteuert oder geregelt wird. Vorzugsweise werden mehrere Umwälzpumpen eingesetzt, die z.B. pro Wand oder Himmelsrichtung getrennt gesteuert werden.

Die Wärmeträgerflüssigkeit ist ein flüssiges Medium, wie z.B. Wasser. Auch die Verwendung eines Glykol-Wasser-Gemisches oder von Öl oder CO2 unter einem entsprechendem Druck ist möglich. Bevorzugt wird Wasser als Wärmeträgerfluid eingesetzt, wobei Zusätze enthalten sein können, um den Gefrierpunkt herabzusetzen. Vorzugsweise wird ein Heizschlangensystem zur Temperierung eingesetzt.

Bei Verwendung von Wasser als Wärmeträgerfluid kann durch eine zweite Isolierschicht sicher gestellt werden, dass das Wasser in der Temperierschicht nicht einfriert, wenn besonders tiefe Außentemperaturen vorliegen.

Bevorzugterweise arbeitet die Temperierschicht bei Temperaturen zwischen 8°C und 22°C, insbesondere zwischen 12°C und 20°C. Insbesondere ein Temperatumiveau zwischen 12°C und 18°C ist möglich.

Die Steuereinrichtung regelt insgesamt für die Außenhülle oder für jede Außenfläche oder Wand oder für Teile einer Wand die Umwälzpumpe bzw. die Umwälzpumpen derart, dass jeweils die gewünschte Temperatur bzw. das gewünschte Temperaturprofil an der jeweiligen inneren Oberfläche vorliegt. Dazu ist es vorteilhaft, die Temperatur der Temperierschicht(en) und/oder der inneren und/oder auch der äußeren Oberfläche zu erfassen.

In allen Fällen ist die Temperierschicht jeweils zur Heizung und/oder zur Kühlung einsetzbar. Es kann auch gleichzeitig geheizt und gekühlt werden. Möglich ist z.B., dass eine Südwand zur Mittagszeit oder eine Westwand in den Abendstunden gekühlt wird, und, dass eine Ostwand oder eine Nordwand gleichzeitig beheizt werden. Ebenso ist es möglich, dass z.B. eine Ostwand in den Morgenstunden gekühlt wird und im Laufe des Tages oder der Nacht dann beheizt wird.

Es ist auch ein Umwälzbetrieb möglich, bei dem eine oder mehrere Fassadenseiten gekühlt werden und mit dem abgeführten Energiestrom eine oder mehrere andere Fassadenseiten beheizt werden. Mittags kann z.B. an Südfassade Wärme abgeführt werden, die der Nordfassade zugeführt wird. Dann ist es sinnvoll, die eingespeiste Energie direkt ohne den Umweg über den Energiespeicher zur anderen Fassade zu transportieren. In Übergangszeiten ist es sinnvoll Teilwärmeströme direkt zwischen einzelnen Außenfassaden umzuwälzen und nur den zusätzlich benötigten oder überschüssigen Rest aus dem Wärmespeicher abzugreifen bzw. in den Wärmespeicher hinein abzuführen. So kann die für die Umwälzung benötigte Energie minimiert werden.

Ebenso kann aber auch Prozesswärme, oder die Wärme eines Sees oder Flusses oder z.B. Solarenergie genutzt werden. Um Bedarfsspitzen abzudecken, kann eine konventionelle Verbrennungsheizung in Form einer Gas- oder Öl- oder Holzheizung vorgesehen sein, oder es kann eine Wärmepumpe vorgesehen sein, die z.B. z.B. gasmotorisch oder elektrisch angetrieben wird oder es wird zusätzlich Solarwärme eingesetzt.

Vorzugsweise umfasst wenigstens eine Außenwand wenigstens eine Isolierschicht und eine Wand. Die Wand ist in der Regel eine massive, insbesondere auch tragende Wand, die z.B. im wesentlichen aus Steinen, Mauerwerk, oder Holz besteht. Einzelne Außenwände des Gebäudes können deshalb strahlungs- und insbesondere lichtundurchlässig sein.

Vorzugsweise ist wenigstens eine Isolierschicht zwischen der Wand und der Temperierschicht angeordnet. Es kann auch sein, dass die Wand als Isolierschicht dient bzw. die Isolierschicht als isolierende Wand ausgeführt ist. Ob dann eine (zusätzliche) Isolierschicht zwischen der (isolierenden) Wand und der Temperierschicht sinnvoll oder erforderlich ist, hängt von dem Einzelfall ab. Insbesondere hängt es von dem Wärmedurchgangskoeffizienten ab, also z.B. von der Wärmeleitfähigkeit und der Dicke der Wand. Bei geringem Wärmedurchgang durch die Wand kann eine separate (zusätzliche) Isolierschicht weggelassen werden, wenn hingegen die Wand eine hohe Wärmeleitfähigkeit aufweist, sollte eine (zusätzliche) Isolierschicht zwischen Temperierschicht und Wand aufgebracht werden. Es kann auch möglich sein, dass in der Isolierschicht Rohre oder dgl. für ein Wärmeträgerfluid angeordnet sind, um die erforderliche Wärmeleistung abzugeben, oder um im Kühlfalle die erforderliche Wärmeleistung abzuführen. Dann ist der Teil der Isolierschicht mit den Wärmeträger rohren gleichzeitig Temperierschicht, so dass ein separate Temperierschicht nicht vorhanden sein muss.

Weiterhin hängt es auch von dem Temperatumiveau ab, mit dem die Temperierschicht betrieben wird, ob eine (zusätzliche) Isolierschicht zwischen Temperierschicht und Wand nötig oder sinnvoll ist. Ob eine (massive) Wand aus Steinen oder dergleichen erforderlich ist, hängt von den statischen Bedingungen ab.

In einer bevorzugten Weiterbildung der Erfindung ist zwischen der Temperierschicht und der äußeren Oberfläche eine Blenderschicht bzw. Verblendungsschicht vorgesehen. Die Blenderschicht kann insbesondere ein Putzschicht, so z.B. ein Außenputzschicht, oder eine Verblendung mit einer Klinkerschicht oder eine Schicht aus Holz, wie z.B. eine Vertäfelung sein. Besonders bevorzugt liegt ein direkter Kontakt zwischen der Blenderschicht und der Temperierschicht vor, um im Sommer die auf die Blenderschicht fallende Energie effektiv einfangen zu können, und um diese im jahreszeitlichen Energiespeicher speichern zu können. Dazu muss ein guter Wärmeübergang zwischen Blenderschicht und Temperierschicht vorliegen. Eine hinterlüftete Fassade ist z.B. in der Regel ungeeignet, da dort in der Luftschicht im Sommer ein großer Wärmeanteil abgeführt wird. Im Heizfall wiederum ist ein solcher Luftspalt ungünstig, da die Heizenergie durch den Luftspalt teilweise abgeführt wird.

Bei einem Wandaufbau, bei dem von innen nach außen zunächst die z.B. tragende Wand vorgesehen ist, an die sich die Isolierschicht mit damit darauf aufgebrachter Temperierschicht und damit verbundener Blenderschicht anschließt, ist der Wärmedurchgangskoeffizient von der Temperierschicht nach außen relativ hoch. Der Wärmedurchgangskoeffizient von der Temperierschicht nach innen ist relativ gering. Das erscheint zunächst negativ, da dadurch mehr Heizenergie im Winter benötigt wird. Es ist aber positiv, da die Heizenergie ja nur auf einem Temperatumiveau von z.B. 15°C benötigt wird.

Die Heizenergie zur Temperierung der Außenhülle wird hier nicht über die Verbrennung von fossilen Brennstoffen erzeugt, sondern aus dem Permanentspeicher entnommen. Ob nun etwas mehr oder weniger Heizenergie benötigt wird, ist praktisch nur bei der Dimensionierung des Speichers zu berücksichtigen. Für die Zurverfügungstellung der Energie wird nur eine sehr geringe Pumpenergie benötigt. Um den Permanentspeicher im Sommer wieder entsprechend zu beschicken, muss im Sommer im Durchschnitt über mehrere Jahre etwa eine der Heizenergie entsprechend große Wärmemenge wieder in den Permanentspeicher eingebracht werden. Dazu darf dann der Wärmeübergangswiderstand von außen zu der Temperierschicht nicht zu groß sein, so dass der Wärmedurchgang von außen zu der Temperierschicht nicht zu stark behindert werden sollte.

Um die Heizenergie für die Außenhülle zu verringern kann zwischen der Temperier schicht und der äußeren Oberfläche noch eine zweite Isolierschicht vorgesehen sein. Das hängt von den gegebenen Umständen ab. Eine zweite Isolierschicht senkt die Wärmeverluste aus der Temperierschicht an die Umgebung bei kalten Temperaturen und verringert somit die einzubringende Heizenergie. Das kann z.B. in weit nördlich gelegenen Gegenden oder in Gegenden mit wenig Sonneneinstrahlung sinnvoll sein, in denen die überschüssige Sonneneinstrahlung im Sommer kleiner ist als der Wärmebedarf im Winter.

In einer einfachen Ausgestaltung der Erfindung liegt, wie schon beschrieben, im Wesentlichen folgender Wandaufbau des Gebäudes von innen nach außen vor:
- (optionale Wand aus Steinen gemauert, etc.)
   a) (erste) Isolierschicht,
   b) erste Temperierschicht,
   c) Blenderschicht.

In einer bevorzugten Weiterbildung der Erfindung kann auch im Wesentlichen folgender Wandaufbau von innen nach außen vorliegen:
- (optionale Wand aus Steinen gemauert, etc.)
   a) erste Isolierschicht,
   b) erste Temperierschicht,
   c) zweite Isolierschicht,
   d) zweite Temperierschicht,
   e) Blenderschicht.

In allen Ausgestaltungen haben die einzelnen Schichten vorzugsweise zueinander wärmeleitenden Kontakt untereinander.

In beiden Fällen muss keine separate gemauerte Wand oder dergleichen vorhanden sein, sondern es reicht auch eine Isolierschicht. So kann z.B. auch eine Dachfläche derart ausgerüstet werden. Dann dienen die Dachbalken mit dazwischen liegender Isolierung als Isolierschicht. Die Temperierschicht ist dann außen auf der Isolierschicht vorgesehen, an die sich die Blenderschicht im direkten Kontakt anschließt

Dabei kann auf der Innenseite der Wand z.B. noch eine Putzschicht oder eine Verkleidung oder dergleichen vorgesehen sein.

Bei dieser Ausgestaltung dient die erste Temperierschicht insbesondere im Winter zur Beheizung. Die Wärmeverluste beim Heizen nach außen werden durch die zweite Isolierschicht gering gehalten. Durch die erste Isolierschicht bedingt, reicht die Beheizung auf niedrigstem Temperatumiveau aus, um behagliche Innentemperaturen in einem Gebäude zu erzielen, das mit einem solchen Wandaufbau versehen ist

Im Sommer kann hingegen Solar- oder Umgebungswärme, die in der Blenderschicht aufgenommen wird, durch die zweite Temperierschicht abgeführt und gespeichert oder sonstwie verwendet werden. Gleichzeüig kann mittels der ersten Temperierschicht der Innenraum gekühlt werden. Umgebungswärme kann immer dann abgeführt und in den Speicher eingebracht werden, wenn die Umgebungstemperatur oberhalb der Speichertemperatur des Erdwärmespeichers, also z.B. 15°C, liegt.

Bei allen Ausgestaltungen kann die Temperierschicht z.B. in Mörtel, Lehm, Beton etc. eingelassene Schläuche aus Metall oder aus Kunst- oder Naturstoff, aus Gummi, aus Polypropylen oder aus sonstigen Materialien aufweisen. Zur besseren Wärmeverteilung können geeignete Wärmeverteiler vorgesehen sein.

Die zweite Isolierschicht kann vorgesehen sein, um die Wärmeverluste bei der Beheizung der ersten Temperierschicht gering zu halten. Es kann auch eine dritte Isolierschicht zwischen Blenderschicht und zweiter Temperierschicht vorgesehen sein, um z.B. bei tiefen Außentemperaturen ein Einfrieren des Wärmeträgerfluids in der zweiten Temperierschicht zu verhindern.

Die Steuereinrichtung regelt die Drehzahl der Umwälzpumpe bzw. die jeweiligen Drehzahlen der Umwälzpumpen vorzugsweise derart, dass die gewünschte Temperatur bzw. das gewünschte Temperaturprofil an der inneren Oberfläche vorliegt. Dazu wird vorzugsweise die Temperatur einzelner und insbesondere aller Temperierschicht(en) erfasst. Auch einige Temperatursensoren zur Erfassung der Temperaturen der inneren Oberflächen, zur Erfassung der Innenraumtemperatur(en) und zur Erfassung der Außentemperatur und zur Erfassung der Temperaturen auf den einzelnen Flächen der äußeren Oberfläche sind vorzugsweise vorhanden.

So kann jede einzelne Wand je nach Temperaturprofil individuell geheizt oder gekühlt werden.

Die erfindungsgemäße Heizung bzw. Kühlung des Gebäudes hat erhebliche Vorteile. So wird auf der Außenseite der Wand die Temperatur festgelegt. Das Problem der Schimmelpilzbildung auf Innenwänden oder im Mauerwerk aufgrund von auskondensierendem Wasser kann somit erfindungsgemäß in erheblichen Maße verringert oder gar ausgeschlossen werden, da der Taupunkt nicht erreicht wird.

Sollte eine Zusatzheizung erforderlich sein, da trotz vorhandener Wärmequellen die erreichte Temperatur nicht ausreicht, so ist der zusätzliche Wärmebedarf jedenfalls gering. Liegt z.B. eine Außentemperatur von -10°C vor, so beträgt bei einer gewünschten Innentemperatur von 20°C das Temperaturgefälle von innen nach außen 30°C. Wird die Außenhülle durch Erdwärme auf z.B. konstant 14°C gehalten, so ist der nötige Wärmeaufwand im Gebäude 6/30 also nur 20%. Bei einer nötigen Heizleistung von z.B. 10 kW insgesamt, werden intern nur noch 2 kW benötigt. Eine solche Leistung wird oft schon durch innere Wärmequellen zur Verfügung gestellt. Wird hingegen Erdwärme mit z.B. 11 °C zur Verfügung gestellt, so erhöht sich der interne Heizbedarf bei gleichen Außenbedingungen nur von 20 auf 30%. Im Kühlfäll im Sommer wird die gewünschte Innenraumtemperatur sicher eingehalten, da die Temperatur der Temperierschicht in der Regel kleiner 20°C ist.

Wird im Winter eine Zusatzheizleistung benötigt, kann diese über alle bekannten Heizarten eingebracht werden. Aufgrund der geringen benötigten Leistung bietet sich eine elektrische Zusatzheizung an, die bedarfsweise zugeschaltet werden kann, wenn in einzelnen Räumen das erreichte Temperatumiveau nicht ausreicht. Dazu kann eine Zusatzheizleistung pro Raum von z.B. 100 Watt oder einigen hundert Watt ausreichen.

Der Vorteil ist, dass eine konventionelle Heizungsanlage nicht unbedingt nötig ist. Weder Heizkörper, noch Heizkörperrohre, noch ein Brenner, noch ein Öltank oder Gasanschluss ist unbedingt erforderlich. Das spart erhebliche Investitions- und Betriebskosten ein. Demgegenüber stehen die Kosten für den Anschluss an eine Ener giequelle, wie z.B. die Kosten für die Herstellung und Montage einer oder mehrerer Erdsonden, die aber nur einmalig anfallen.

In einer bevorzugten Weiterbildung der Erfindung ist noch eine Zusatzheizung vorgesehen, die insbesondere als Fußbodenheizung ausgeführt ist. Die Heizschlangen der Fußbodenheizung werden vorzugsweise in größerem Abstand verlegt als normalerweise üblich, z.B. wird der Abstand verdoppelt und/oder es wird die Gesamtlänge der verlegten Wärmeträgerrohre erheblich reduziert, z.B. um wenigstens 25%, insbesondere um wenigstens 35% und vorzugsweise um wenigstens 50% oder sogar um 70% und mehr. Das ist möglich, da die einzubringende Heizleistung (oder abzuführende Kühlleistung) erheblich geringer ist als bei konventionellen Gebäuden. Als Wärmequelle für eine Zusatzheizung ist insbesondere eine Wärmepumpe bevorzugt. Es können aber auch andere Wärmequellen eingesetzt werden.

Bei der Sanierung eines Altgebäudes kann die bestehende Heizungsanlage weiterbetrieben werden. Gegebenenfalls können die Heizkörper ausgetauscht werden, um die Heizleistung an den erheblich geringeren Bedarf anzupassen.

Vorzugsweise ist mittels der Steuereinrichtung bei Unterschreitung einer bestimmten Energiespeicheraustrittstemperatur die aus dem Energiespeicher abgegriffene Wärmemenge reduzierbar. Das ist insbesondere bevorzugt, wenn die Temperierschicht zu Heizzwecken eingesetzt wird.

Die Energiespeicheraustrittstemperatur entspricht der Temperatur des Vorlaufs der Flächenheizung. Bei Verwendung eines Erdwärmespeichers kann bei ständig hohem Wärmeabgriff die Temperatur des Erdreichs in unmittelbarer Nähe der Erdsonde abfallen und sich so eine niedrigere Temperatur des den Erdwärmespeicher verlassenden Wärmeträgerfiuids ergeben. Um einen Temperaturausgleich und ein Nachströmen der Wärmeenergie aus dem umgebenden Erdreich zu ermöglichen kann deshalb die aus dem Erdreich abgegriffene Wärmemenge zeitweise oder periodisch reduzierbar sein.

Wird hingegen das Gebäude z.B. im Sommer gekühlt und die aus dem Gebäude abtransportierte Wärmemenge in den Energiespeicher eingebracht, kann die Energiespeicheraustrittstemperatur bei langem Kühlbetrieb einen bestimmten Wert überschreiten. Um nun den Abtransport der Wärme im Erdreich sicherzustellen kann die in den Energiespeicher eingebrachte Wärmemenge ebenfalls reduzierbar sein.

Zur Reduzierung einer in den Energiespeicher eingebrachten oder daraus abgegriffenen Wärmemenge kann insbesondere der Massenstrom des Wärmeträgerfluids reduzierbar oder abschaltbar sein oder getaktet werden.

Vorzugsweise wird die mit dem Energiespeicher ausgetauschte Wärmemenge um wenigstens 20%, insbesondere um 30%, vorzugsweise um wenigstens 50 % reduziert.

Möglich ist z.B., dass die mit dem Energiespeicher ausgetauschte Wärmemenge für wenigstens eine vorbestimmte Zeitspanne reduziert wird, welche z.B. 5 Minuten, insbesondere wenigstens 10 oder 30 Minuten betragen kann. Auch Zeitspannen von z.B. einer Stunde, zwei, drei oder vier oder mehr Stunden sind möglich.

Ebenso ist ein kurzzeitiges periodisches Takten im Minuten-, Sekunden- oder Millisekundenbereich möglich, um die abgegriffene oder eingebrachte Wärmemenge zu steuern. Dadurch wird dem Wärmespeicher die Möglichkeit der Regeneration gegeben, wenn der Wärmeabgriff zu stark ist.

Weiterhin betrifft die Erfindung ein Verfahren zur Herstellung eines temperierbaren Gebäudes, bei dem auf eine Außenhülle eine Temperierschicht zur Temperierung des Gebäudes aufgebracht wird. Vorzugsweise wird das Verfahren zur Sanierung eines Altgebäudes angewendet.

Das erfindungsgemäße Verfahren bietet ebenfalls erhebliche Vorteile. Wie auch bei dem erfindungsgemäßen Gebäude erfolgt ein wesentlicher Anteil der Beheizung von außen und nicht von innen. Dadurch wird der schon oben beschriebene "Frühlingseffekt" erzielt, bei dem das Gebäude einem mittleren Temperaturbereich ausgesetzt ist, in dem keine oder nur eine sehr geringe Nachheizung erforderlich ist.

Vor Anbringung einer Temperierschicht auf der Außenhülle eines Gebäudes kann eine (zusätzliche) Isolierschicht auf die Außenhülle aufgebracht werden, worauf dann die Temperierschicht aufgebracht wird. Bei wärmetechnischer Sanierung eines älteren Gebäudes wird auf das bestehende Gebäude die Temperierschicht (unter Umständen nach Anbringung einer Isolierschicht) aufgebracht.

Gemäß einer bevorzugten Möglichkeit, werden die oben beschriebenen Schichten der Außenwände nacheinander erstellt.

Insbesondere bei wärmetechnischer Sanierung von Altbauten bietet das erfindungsgemäße Verfahren ganz erhebliche Vorteile. Bei Altbauten ist das Problem der Schimmelpilzbildung weit verbreitet. Insbesondere an Wärme- bzw. Kältebrücken schlägt sich Feuchtigkeit nieder, die auf Dauer die Schimmelpilzbildung fördert. Dadurch, dass nach dem erfindungsgemäßen Verfahren die ursprüngliche Außenhülle des Altbaus z.B. einheitlich temperiert wird, kann das Problem der Schimmelpilzbildung grundsätzlich vermieden werden.

Bei ursprünglich mäßig oder schlecht isolierten Gebäuden kann vor Aufbringung der Temperierschicht noch eine (zusätzliche) Isolierschicht aufgebracht werden. Ebenso kann auf die Temperierschicht noch eine zweite Isolierschicht und/oder eine Blenderschicht aus Putz, Wärmeverbundputz oder Klinker aufgebracht werden.

Das erfindungsgemäße Verfahren eignet sich auch deshalb hervorragend zur Sanierung von älteren Gebäuden, da in der Regel innen kein Eingriff erforderlich ist. Die gegebenenfalls vorhandenen Heizkörper können weiterverwendet werden, um Bedarfsspitzen im Winter zu decken, oder aber sie werden demontiert, wenn die inneren Wärmequellen ausreichen. Ansonsten können sie durch an den aktuellen Leistungsbedarf entsprechend angepasste Heizkörper ausgetauscht werden.

Bei dem erfindungsgemäßen Verfahren wird eine Erdsonde in das Erdreich gebracht. Das Volumen des Erdreichs um die Sonde herum dient als Energiespeicher, der mit einer Wärmeträgerflüssigkeit beschickt wird. Die Temperiervorrichtung wird vorzugsweise in Abhängigkeit von den Temperaturen der einzelnen Schichten gesteuert.

In vielen Ausgestaltungen der Erfindung ist der Einsatz einer Wärmepumpe nicht nötig, insbesondere wenn Wärme auf einen Temperatumiveau von etwa 14°C bis 17°C zur Verfügung steht.

Bevorzugt ist, dass ein erfindungsgemäßes Gebäude wenigstens ein Wandsystem gemäß irgendeiner der beschriebenen Weiterbildungen und Ausgestaltungen aufweisen kann. Das Gebäude kann nach dem erfindungsgemäßen Verfahren hergestellt werden.

Außerdem wird darauf hingewiesen, dass sich die Erfindung neben dem Einsatz bei Wohn- oder Bürogebäuden auch für den Einsatz an Industriegebäuden, Fertigungshallen und dergleichen eignet. Insbesondere fensterlose Gebäude können auch damit ausgerüstet werden.

Weitere Vorteile und Anwendungsmöglichkeiten der vorliegenden Erfindung ergeben sich aus dem folgenden Ausführungsbeispiel, das mit Bezug auf die Figuren erläutert wird.

In den Figuren zeigen:
- Fig. 1: ein Wandsystem für das erfindungsgemäße Gebäude nach Fig. 2 in einem Querschnitt in einer schematischen Darstellung,
- Fig. 2: eine Abwicklung der Wände eines erfindungsgemäßen Gebäudes in einer stark schematischen Darstellung,
- Fig. 3: einen Aufbau eines zweiten Wandsystems für das erfindungsgemäße Gebäude nach Fig. 2 in einem Querschnitt in einer schematischen Darstellung,
- Fig. 4: einen Aufbau eines dritten Wandsystems für das erfindungsgemäße Gebäude nach Fig. 2 in einem Querschnitt in einer schematischen Darstellung,
- Fig. 5: einen Aufbau eines vierten Wandsystems für das erfindungsgemäße Gebäude nach Fig. 2 in einem Querschnitt in einer schematischen Darstellung,
- Fig. 6: einen Aufbau eines fünften Wandsystems für das erfindungsgemäße Gebäude nach Fig. 2 in einem Querschnitt in einer schematischen Darstellung,
- Fig. 7: eine stark schematische Ansicht eines weiteren erfindungsgemäßen Gebäudes, und
- Fig. 8: eine konventionelle Zusatzheizung für das Gebäude nach Fig. 7.

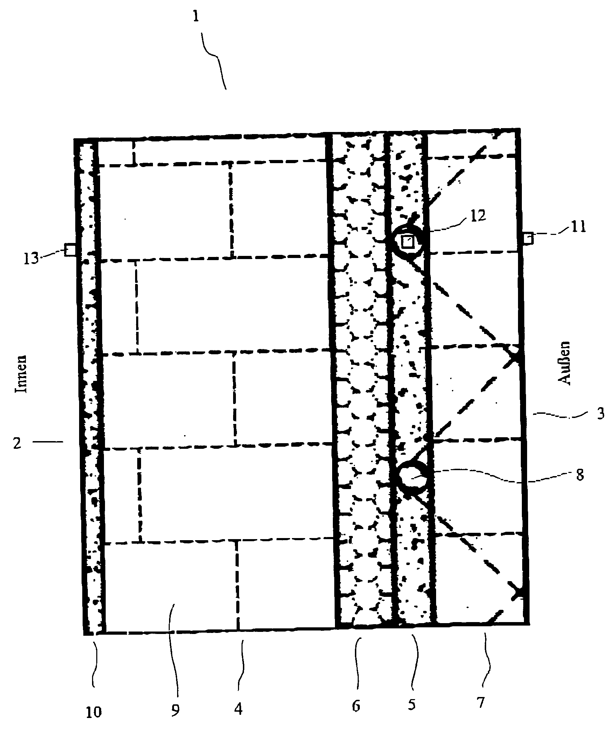

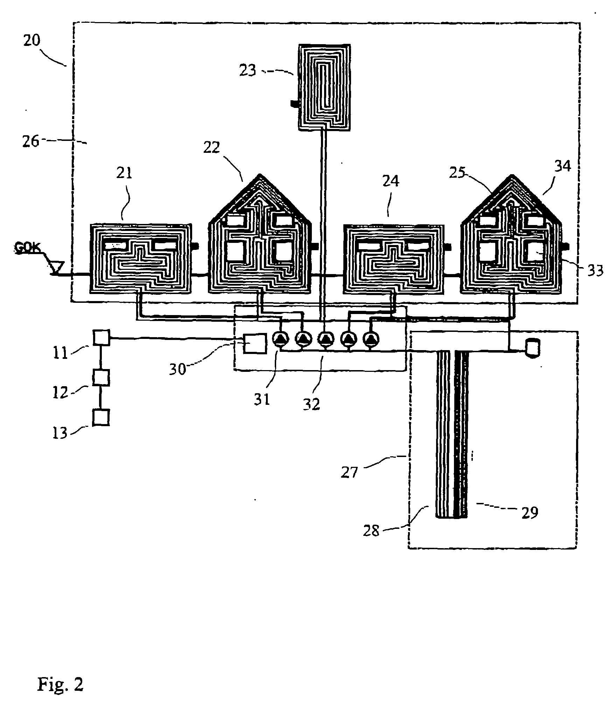

Das in Fig. 1 in einem Querschnitt schematisch dargestellte Wandsystem 1 für das in Fig. 2 dargestellte erfindungsgemäße Gebäude umfasst einen Innenputz 10, der auf eine Wand 4 aufgetragen ist. Die Oberfläche des Innenputzes 10 dient als innere Oberfläche 2 des Wandsystems und ist einem zu temperierendem Innenraum zugeordnet. Nach außen hin schließt sich an die Wand 4 eine Isolierschicht 6 an, auf die eine Heiz- und/oder Kühlschicht 5 als Temperierschicht aufgetragen ist. Daran grenzt die äußere Schicht, nämlich eine Klinkerschicht 7 als Blenderschicht, auf der die äußere Oberfläche 3 des Wandsystems angeordnet ist.

Die Temperierschicht 5 steht in direktem und unmittelbaren Wärmeaustausch mit der Klinkerschicht 7, um die im Sommer einfallende Sonnenenergie effektiv abzuführen und im jahreszeitlichen Energiespeicher bzw. Permanentspeicher zu speichern.

Die Wand 4 kann als gemauerte Wand ausgeführt sein, wie in Fig. 1 dargestellt. Die Wand setzt sich dann aus einzelnen Steinen 9 zusammen. Bei den Steinen kann es sich um alle zum Bau von Gebäuden gängigen Steine oder sonstigen Materialien handeln.

Für die Isolierschicht 6 wird ebenfalls ein übliches Material verwendet, wies es im Stand der Technik bekannt geworden ist.

In anderen Ausgestaltungen können Wand 4 und Isolierschicht 6 als gemeinsame Isolierschicht bzw. isolierende Wand ausgebildet sein, z.B. wenn die Wärmeleitfähigkeit des Materials für die Wand eine entsprechend kleine Wärmeleitfähigkeit aufweist.

In der Heiz- und/oder Kühlschicht 5 sind hier Rohre 8 oder Schläuche 8 in z.B. Mörtel eingebettet, um die erforderliche Wärme in die Heiz- und/oder Kühlschicht 5 einzubringen oder daraus abzuführen. Für die Heiz- bzw. Kühlschlangen können z.B. Systeme verwendet werden, wie sie im Bereich von konventionellen Wandheizungen oder Fußbodenheizungen eingesetzt werden. Als Füll- und Bindematerial kann nicht nur Mörtel verwendet werden, sondern auch jedes andere geeignete Material, welches insbesondere ein relativ guten Wärmeübergang zur Blenderschicht ermöglicht.

In einem oder außen an einem Rohr 8 ist wenigstens ein Temperaturfühler 12 vorgesehen. Vorzugsweise sind an bzw. in einigen Rohren mehrere Temperaturfühler 12 vorgesehen, um die Temperatur des Wärmeträgermediums an unterschiedlichen Stellen zu messen. Als Wärmeträgermedium wird hier im Ausführungsbeispiel Wasser verwendet.

Weiterhin ist hier auf der Innenseite bzw. inneren Oberfläche 2 des Wandsystems 1 ein Temperaturfühler 13 zur Bestimmung der Innentemperatur vorgesehen und es ist auf auf der äußeren Oberfläche 3 ein Temperatursensor 11 zur Bestimmung der äußeren Temperatur angeordnet. Mittels der Steuereinrichtung 30 wird der Durchfluss durch die einzelnen Heiz- und/oder Kühlschichten 5 gesteuert.

In Fig. 2 ist eine Abwicklung der Außenwände des erfindungsgemäßen Gebäudes 20 dargestellt. Das Gebäude 20 ist hier ein Einfamilienhaus. Es kann aber auch als Mehrfamilienhaus oder als Bürogebäude oder gewerblich genutztes Gebäude ausgeführt sein.

Die Außenhülle 26 des Gebäudes 20 umfasst Außenflächen 21, 22, 23, 24, 25 und 34. Mit dem Wandsystem 1 gemäß Fig. 1 sind die Außenwände 21, 22, 24 und 25 ausgerüstet. Es ist auch möglich, die Dachflächen 34 mit einem solchen Wandsystem auszurüsten, wobei dann vorzugsweise jeweils eine innen liegende Isolierschicht und eine äußere Temperierschicht vorliegt.

In einzelnen oder allen Außenwänden sind natürlich auch Fenster 33 vorgesehen. Zum Transport des Wärmetragermediums durch die Rohre 8 der Außenwände dienen Pumpen 31, 32, die von einer zentralen (oder auch dezentralen) Steuerung 30 gesteuert werden.

Um die gewünschte Innentemperatur einzustellen, werden die Drehzahlen der einzelnen Pumpen so gesteuert, dass sich auf allen Außenwänden 21, 22, 23, 24 und 25 die gewünschten Temperaturbedingungen einstellen. Dazu sind Temperatursensoren 11, 12 und 13 vorgesehen, mittels derer die jeweiligen Bereiche der Außenwände auf die gewünschten Temperaturen eingestellt werden.

Außer den Außenwänden können auch die Dachflächen 34 oder die Solplatte mit einem solchen Wandsystem ausgerüstet sein.

Je nach Umgebungsbedingungen kann es auch vorkommen, dass am späten Nachmittag eine z.B. nach Osten ausgerichtete Außenwand geheizt werden muss, während eine nach Westen ausgerichtete Außenwand noch soviel Sonnenstrahlung erhält, dass sie gekühlt werden soll. Mit der Erfindung ist das einfach bewerkstelligt.

Dadurch, dass hier im Ausführungsbeispiel zur Temperierung Erdwärme eingesetzt wird, macht das System an sich schon automatisch, was gefordert ist. Grundsätzlich wird inhärent bei Außentemperaturen kleiner der Vorlauftemperatur aus dem Erdreich (also z.B. 14°C oder 15°C) geheizt und bei Temperaturen darüber gekühlt. Das Gebäude ist somit innerhalb der Temperierschichten, also innerhalb der Heiz- und/oder Kohlschichten einem "fortwährendem Frühling" ausgesetzt, in dem Tag und Nacht nahezu immer die gleichen Temperaturen vorherrschen.

Als Wärmequelle 27 dient hier Erdwärme, die mittels zweier Erdsonden 28 aus dem Erdreich entzogen wird. Gleichzeitig dient ein etwa zylindrisches Volumen um die Erdsonden herum mit einem ungefähren Radius zwischen etwa 5 und 15 m und einer Länge, die etwa der Tiefe der Erdsonden entspricht, die hier knapp 100 m beträgt, als jahreszeitlicher Energiespeicher 29 bzw. als Permanentspeicher. Der Speichere ist insofern ein Permanentspeicher, da einerseits zeitlich die Energie nahezu unbegrenzt gespeichert wird und andererseits da örtlich die Speicherung nicht nur auf den angegeben Radius beschränkt ist, sondern da auf Dauer auch weiter entferntere Bereiche zur Energiespeicherung beitragen. Im Sommer wird überschüssige Energie in das Erdreich abtransportiert und im Winter wieder herausgeholt. Wird besonders lang viel Energie in den Speicher eingebracht oder besonders lang viel Energie dem Speicher entzogen, so wird das effektiv genutzte Volumen des Speichers noch vergrößert.

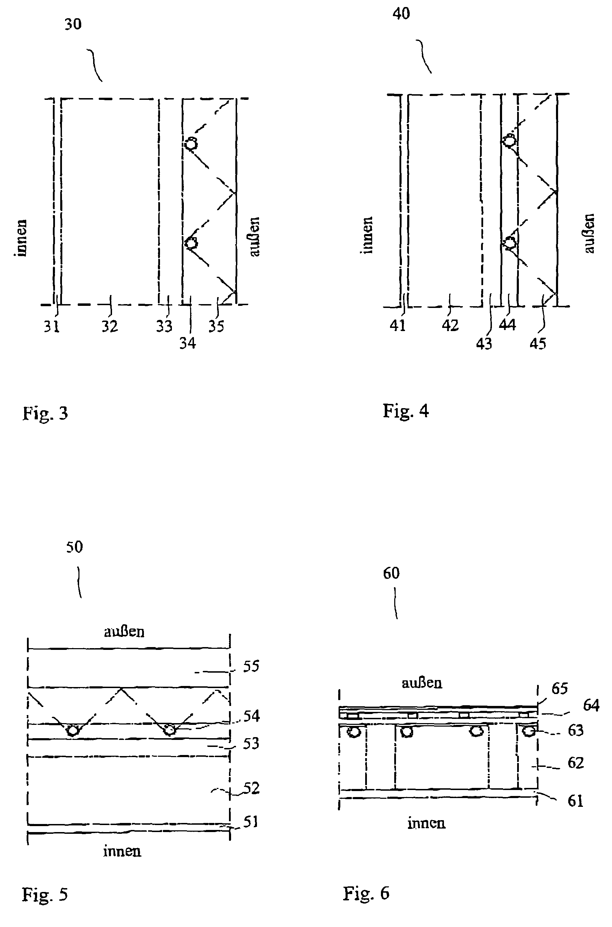

In den Figuren 3 bis 6 sind weitere mögliche Wandaufbauten von Außenflächen eines erfindungsgemäßen Gebäudes dargestellt.

Der Aufbau des Wandsystems 30 nach Figur 3 entspricht im Wesentlichen dem in Fig. 1 gezeigten Aufbau. Auf der Innenseite der massiven und strahlungsundurchlässigen Wand ist der Putz 31, an den sich nach außen hin das Mauerwerk 32 und daran eine isolierende Trägerplatte 33 anschließt. Die Heizrohre 34 sind vermörtelt.

Nach außen hin schließt sich in direktem Kontakt eine Verblendung 35 in Form einer Klinkerschicht an.

Bei dem Aufbau des Wandsystems 40 nach Fig. 4 ist auf der inneren Oberfläche eine Putzschicht 41 auf dem Gasbetonmauerwerk 42 vorgesehen. An die Isolierschicht 43 schließen sich nach außen hin die vermörtelten Heizrohre 44 und weiter nach außen hin eine Gasbetonschicht 45 an. Fig. 4 zeigt einen möglichen Aufbau im Drempelbereich.

Ein Fußbodenbereich im Drempel kann entsprechend Fig. 5 aufgebaut sein. Das Wandsystem 50 weist innen wiederum eine Putzschicht 51 und darüber eine Betondecke 52 auf, an die sich eine Trägerplatte bzw. Isolierung 53 anschließt. Die Heizrohre 54 sind hier in Estrich verlegt, oberhalb dessen sich der ungeheizte Dachraum befindet.

Einen möglichen Dachaufbau oder einen möglichen Kehlbalkenaufbau zeigt Fig. 6 mit dem Wandsystem 60. Von innen nach außen erstreckt sich hier zunächst eine Gipsplatte 61, eine Isolierungsschicht 62 in der auch die Holzbalken angeordnet sind, die Heizrohre 63 mit der Wärmeträgerplatte und nach außen hin schließlich die Dacheindeckung 65.

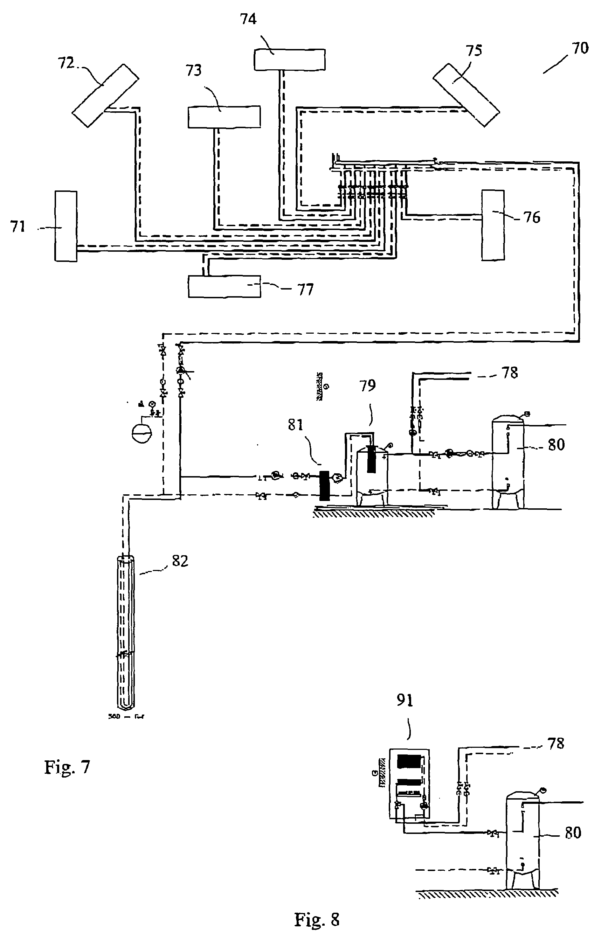

Ein mögliches Beispiel der Außenflächen eines Wohnhauses 70 zeigt Fig. 7 in stark schematischer Darstellung. Das Gebäude 70 hat hier im Beispiel insgesamt eine Nutzfläche von etwa 186 Quadratmetern bei einer Hüllfläche von ca. 406 Quadratmetern und einem Volumen von etwa 582 Kubikmetern.

Mit einem angenommenen Grundriss und einer festgelegten Ausrichtung des Hauses hat die in nördlicher Richtung gelegene Außenwand 71 eine Fläche von etwa 41 Quadratmetern, während die nach Norden ausgerichtete Dachschräge 72 etwa 26 Quadratmeter aufweist. Die nach Westen ausgerichtete Außenwand 73 umfasst etwa 34 und die Kehlbalkendecke 74 ca. 57 Quadratmeter, während die nach Süden gelegene Dachschräge 75 ebenfalls etwa 26 und die auch nach Süden gerichtete Außenwand 76 ungefähr 41 Quadratmeter umfasst Die Außenwand 77 nach Osten hin weist eine Fläche von etwa 34 Quadratmeter auf. Die jeweiligen Außenwände 71 bis 77 sind erfindungsgemäß aufgebaut, wie es in den Fig. 1 und 3 bis 6 dargestellt ist

Die nötige Heizenergie wird zu einem ganz erheblichen Anteil als Erdwärme durch die Erdsonde 82 aus dem Boden geholt und durch Pumpen in Abhängigkeit von den jeweils aktuellen Außentemperaturen und den jeweils gewünschten Innentemperaturen aus dem Erdreich entnommen. Hier ist eine separate Zusatzheizung in Form einer Fußbodenheizung vorgesehen. Die Fußbodenheizung wird durch die Leitungen 78 beschickt. Dazu wird mittels einer Wärmepumpe 81 das Temperatumiveau des aus der Erdsonde kommenden Wärmeträgerfluids auf das für Fußbodenheizungen übliche Temperatumiveau angehoben. Mit der Wärmepumpe wird auch der Warmwasserspeicher versorgt. Mit der Fußbodenheizung muss aber nur ein geringer Anteil der benötigten Heizenergie zugeführt werden, da der Hauptteil schon über die Temperierschichten zugeführt wird.

Zusätzlich dazu kann gegebenenfalls auch die in Fig. 8 dargestellte konventionelle Heizungsanlage 91 verwendet werden, um Warmwasser zur Verfügung zu stellen, und um einen eventuellen Restwärmebedarf zu decken.

Bei einem zweischaligen Mauerwerk eines Gebäudes 70 kann die innere Schale an Stelle der Kemdämmung mit einer an sich konventionellen Flächenheizung belegt werden. Das Trägermaterial der Rohrleitungen kann dann die einzige Isolierung sein und es kann auf die eigentliche Kernisolierung verzichtet werden. Mit Hilfe der Sperrschicht kann die Außenschale, die z.B. als Klinkerverblendung ausgeführt ist, auf z.B. 15°C temperiert werden.

Für die Energieversorgung wird hier im Beispiel mittels einer oder es wird mittels mehrerer Erdsonden dem Erdreich Wärme entzogen. Dabei wird das geothermisch erwärmte Wasser ohne Nutzung einer Wärmepumpe durch die Sperrschicht gepumpt und anschließend wieder geothermisch aufgeheizt. Die Leistung einer solchen Pumpe liegt typischerweise zwischen 50 und 200 Watt bei z.B. 100 Watt oder 150 Watt und hängt von der Größe und der Art des Gebäudes ab. Mit 15°C Außentemperatur wird dem Haus Frühling vorgegaukelt, auch wenn die tatsächlichen Außentemperaturen bei 5°C oder bei 0°C oder sogar bei -10°C liegen.

Zur Ergänzung der Restwärme und zur Trinkwasseraufbereitung können verschiedene Möglichkeiten verwendet werden. So kann die restliche Wärme über Elektroheizung zugeführt werden. Es ist auch möglich, einige wenige Heizschlangen einer Fußbodenheizung vorzusehen, über die dann die zusätzlich benötigte Heizleistung eingebracht wird, die z.B. eine konventionelle Heizung oder eine Wärmepumpe zur Verfügung stellt. Mit einer Wärmepumpe ist das Gebäude autark und es kann z.B. auf einen Gasanschluss verzichtet werden.

Im Sommer wird bei hohen Außentemperaturen das relativ niedrige Temperatumiveau der Erdwärme effektiv für einen Kühlbetrieb verwendet werden, so dass der hohe und kostspielige Geräteaufwand für zusätzliche Kühlgeräte entfallen kann. Gleichzeitig wird damit der jahreszeitliche Energiespeicher geladen.

Insgesamt ist mit einem erfindungsgemäßen Gebäude eine ganz erhebliche Einsparung von 65% und mehr der Heizenergie möglich. Weiterhin wird das Gebäude im Sommer gleichzeitig kostengünstig und effektiv gekühlt, ohne dass zusätzliche Kosten entstehen. Dabei wird kein Platz und kein Raum für Heizkörper benötigt. Die Erfindung eignet sich deshalb im hohem Maße auch zur Nachrüstung bestehender Gebäude. Die Bildung von Schimmelpilz bei der Sanierung von Altgebäuden ist nicht zu befürchten, da keine Taupunktunterschreitung vorliegt.

Deshalb kann nahezu jedes ältere bestehende Gebäude erfindungsgemäß umgerüstet werden, indem auf die Außenseite eine Isolierschicht aufgebracht wird, die durch eine damit verbundene Temperierschicht beheizt wird. Die Bohrung für die Erdsonde kann auch nachträglich angefertigt werden.

## Patentansprüche

1. Temperierbares Gebäude mit
einem temperierbaren Innenraum,
einer Außenhülle mit wenigstens einer Isolierschicht, einer Temperierschicht und
einer äußeren Oberfläche,
mit wenigstens einer Steuereinrichtung, und
mit wenigstens einer Temperiervorrichtung, welche durch die Steuereinrichtung gesteuert die Temperierschicht zum Heizen und zum Kühlen des Gebäudes mit einer Wärmeträgerflüssigkeit beschickt,
wobei wenigstens ein jahreszeitlicher Energiespeicher vorgesehen ist, der beim Kühlen des Gebäudes aufgeladen und beim Heizen des Gebäudes entladen wird,
wobei die Temperierschicht zwischen der Isolierschicht und der äußeren Oberfläche angeordnet ist.

2. Gebäude nach Anspruch 1, **dadurch gekennzeichnet, dass** ein Erdwärmespeicher zur Temperierung genutzt wird, wobei vorzugsweise oberflächennahe Erdwärme in einer Tiefe bis zu 500 m, insbesondere bis zu etwa 150 m genutzt und gespeichert wird.

3. Gebäude nach Anspruch 1 oder 2 , **dadurch gekennzeichnet, dass** wenigstens ein Temperaturfühler vorgesehen ist, insbesondere wenigstens ein Temperaturfühler zur Bestimmung der Temperatur der Temperierschicht und/oder der Temperatur des Innenraums und/oder der Außentemperatur und/oder der Temperatur der Innenwand.

4. Gebäude nach mindestens einem der vorhergehenden Ansprüche, **dadurch gekennzeichnet, dass** bei Unterschreitung einer bestimmten Energiespeicheraustrittstemperatur die aus dem Energiespeicher abgegriffene Wärmemenge mittels der Steuereinrichtung reduziert wird, indem vorzugsweise der Massenstrom des Wärmeträgerfluids reduziert wird.

5. Gebäude nach mindestens einem der vorhergehenden Ansprüche, **dadurch gekennzeichnet, dass** mittels der Steuereinrichtung die mit dem Energiespeicher ausgetauschte Wärmemenge für wenigstens eine vorbestimmte Zeitspanne reduziert wird, welche z.B. wenigstens 10 Minuten, insbesondere wenigstens 30 Minuten und z.B. 1 Stunde beträgt.

6. Gebäude nach mindestens einem der vorhergehenden Ansprüche, **dadurch gekennzeichnet, dass** die Temperierschicht in direktem Kontakt mit einer äußeren Blenderschicht steht.

7. Gebäude nach mindestens einem der vorhergehenden Ansprüche, **dadurch gekennzeichnet, dass** eine Temperatur der Temperierschicht zur Temperierung in einem Bereich zwischen 8°C und 22°C oder insbesondere zwischen 10°C und 18°C oder zwischen 12°C und 16°C liegt.

8. Gebäude nach mindestens einem der vorhergehenden Ansprüche, **dadurch gekennzeichnet, dass** bei wenigstens einer Aussenwand im Wesentlichen wenigstens folgender Wandaufbau von innen nach außen vorliegt:
a) erste Isolierschicht,
b) erste Temperierschicht,
c) zweite Isolierschicht,
d) zweite Temperierschicht,
e) Blenderschicht.

9. Verfahren zur Herstellung eines temperierbaren Gebäudes, insbesondere nach einem der vorhergehenden Ansprüche, bei dem auf eine Außenhülle eine Temperierschicht zur Temperierung des Gebäudes aufgebracht wird.

10. Verfahren nach Anspruch 9, bei dem das Verfahren zur Sanierung eines Altgebäudes angewendet wird.

11. Verfahren zur Herstellung eines Gebäudes nach Anspruch 9 oder 10, wobei zunächst auf die Außenhülle eine Isolierschicht und darauf die Temperierschicht aufgebracht wird.
